# EUROPÄISCHE PATENTANMELDUNG

(11) **EP 2 743 041 A1**
(43) Veröffentlichungstag der Anmeldung: **18.06.2014**
(21) Anmeldenummer: 13005375.4
(22) Anmeldetag: 14.11.2013
(51) Int. Cl.: B25J 11/00, B25J 15/00

(54) **Greifer für Lebensmittelportionen mit flexiblem Flächenelement**

(30) Priorität: 17.12.2012 DE 102012024833
(71) Anmelder: Weber Maschinenbau GmbH Breidenbach, 35236 Breidenbach (DE)
(72) Erfinder: Terruli, David, 35037 Marburg (DE)
(74) Vertreter: Grünecker, Kinkeldey, Stockmair & Schwanhäusser

(57) **Zusammenfassung**

Die Erfindung bezieht sich auf einen Greifer (1) für Lebensmittelportionen, insbesondere Stapel von aufgeschnittenen Lebensmittelscheiben, für einen Roboter, wobei der Greifer (1) eine Grundstruktur (2), die an dem Roboter anbringbar ist, ein Greiferelement (3), das eine Schaufelkante (10) und eine Auflagefläche (15), die sich an die Schaufelkante (10) anschließt, umfasst, und wobei die Schaufelkante (10) bezüglich der Grundstruktur (2) beweglich ist, um die Lebensmittelportion zu untergreifen. Des Weiteren ist die Auflagefläche (15) ausschließlich durch ein flexibles Flächenelement (14) gebildet.

## Beschreibung

Die vorliegende Erfindung bezieht sich auf einen Greifer für Lebensmittelportionen, insbesondere Stapel von aufgeschnittenen Lebensmittelscheiben, für einen Roboter, wobei der Greifer eine Grundstruktur umfasst, die an dem Roboter anbringbar ist, und ein Greiferelement, das eine Schaufelkante und eine Auflagefläche, die sich an die Schaufelkante anschließt, umfasst, wobei die Schaufelkante bezüglich der Grundstruktur beweglich ist, um die Lebensmittelportion zu untergreifen. Die vorliegende Erfindung bezieht sich weiterhin auf einen Roboter mit einem oder mehreren solchen Greifern und auf ein Verfahren zum Greifen von Lebensmittelportionen mit einem Greifer in einem Roboter.

Im Stand der Technik sind Greifer bekannt, die Aufnahmeplatten aufweisen, die unter Lebensmittelportionen eingeführt werden, um diese zu untergreifen. In diesem Zusammenhang ist es weiterhin aus den Veröffentlichungen EP 2 039 632 A1, WO 2007/093774 A1, EP 2 036 841 A1 und US 2010/0133862 A1 bekannt, dass die Aufnahmeplatten der Greifer von beweglichen Bändern umgeben sind, um eine Relativbewegung zwischen den Aufnahmeplatten und der Lebensmittelportion bei der Aufnahme zu kompensieren.

Diese Lösungen aus dem Stand der Technik weisen aber den Nachteil auf, dass der Greifer insbesondere im geöffneten Zustand relativ groß ist, da die Aufnahmeplatten nach außen bewegt werden. Dies trifft insbesondere auf einseitige Greifer zu, da die Aufnahmeplatte des einen Greiferelements bei gleicher Portionsgröße den doppelten Verschiebeweg bewegt werden muss, als die jeweiligen Aufnahmeplatten eines doppelseitigen Greifers.

Die Aufgabe der vorliegenden Erfindung liegt darin, einen Greifer bereitzustellen, der geringere Bauraumanforderungen im Betrieb hat, und eine effiziente und betriebssichere Aufnahme von Lebensmittelportionen ermöglicht.

Deswegen stellt die Erfindung einen Greifer für Lebensmittelportionen, insbesondere Stapel von aufgeschnittenen Lebensmittelscheiben, für einen Roboter bereit, wobei der Greifer eine Grundstruktur umfasst, die an dem Roboter anbringbar ist, und weiterhin ein Greiferelement umfasst, das eine Schaufelkante und eine Auflagefläche, die sich an die Schaufelkante anschließt, umfasst, wobei die Schaufelkante bezüglich der Grundstruktur beweglich ist, um die Lebensmittelportionen zu untergreifen. Erfindungsgemäß wird die Auflagefläche ausschließlich durch ein flexibles Flächenelement gebildet. Im Gegensatz dazu weisen die Lösungen aus dem Stand der Technik zusätzlich ein starres Auflageelement auf, auf dem ein Band oder ein Folienelement läuft. Dadurch, dass das flexible Flächenelement nicht als Ganzes in seiner die Auflagefläche bildenden Form verfahren werden muss, sondern gefaltet oder umgelenkt werden kann, können die Bauraumanforderungen des Greifers signifikant verringert werden. Das flexible Flächenelement kann insbesondere aus einem elastischen oder festen Band oder einer Folie bestehen, die insbesondere durch eine Grundstruktur gestützt wird, sodass eine Auflagefläche gebildet werden kann. Weiterhin kann das flexible Flächenelement auch aus einer flächigen, gliedrigen Kette bestehen. Die Flexibilität des Flächenelements ist zumindest bezüglich einer Biegung desselben in einer Richtung gegeben.

Der Greifer ist zum Handhaben von Lebensmittelportionen ausgelegt, insbesondere Stapel von aufgeschnittenen Lebensmittelscheiben, zum Beispiel Wurst-, Käse- oder Schinkenscheiben, aber auch für Fleisch- oder Käsestücke.

Insbesondere wird das flexible Flächenelement an dem der Schaufelkante gegenüberliegenden Ende der Auflagefläche umgelenkt. Nachdem die Auflagefläche vornehmlich in Längenrichtung des Greifers bewegt wird, kann somit die Bauraumanforderung in Längenrichtung reduziert werden. Insbesondere wird das flexible Flächenelement nach oben oder unten umgelenkt. Das flexible Flächenelement kann alternativ oder zusätzlich auch aufgewickelt werden.

Vorteilhafterweise ist das flexible Flächenelement an der Schaufelkante befestigt. Damit kann durch Bewegung der Schaufelkante eine Bewegung des flexiblen Flächenelements bewirkt werden.

Es kann ein Greiferelement pro Greifer vorgesehen sein, das ausgelegt ist, durch Bewegung der Schaufelkante bezüglich der Grundstruktur von einer Seite eine Lebensmittelportion zu untergreifen. Bei solchen einseitigen Greiferelementen ist die erfindungsgemäße Lehre insbesondere vorteilhaft, da die nötigen relativ großen Verschiebungen des Greiferelements auf geringem Bauraum realisiert werden können.

Vorteilhafterweise ist ein Haltemittel an der Grundstruktur vorgesehen, das ausgelegt ist, die Lebensmittelportion während des Untergreifens durch das Greiferelement zu halten. Dies ist insbesondere bei einseitigen Greifern vorteilhaft, da die von nur einer Seite auf das Lebensmittelportion aufgebrachte Kraft beim Unterschieben des Greiferelements zu einer Verschiebung der Lebensmittelportion führen könnte, die durch das Haltemittel verhindert werden kann. Das Haltemittel ist insbesondere ein elastischer oder aktiv angetriebener Niederhalter, der von oben auf die Lebensmittelportion abgesenkt werden kann. Das Haltemittel kann zusätzlich mit Saugelementen versehen sein, um die Lebensmittelportionen besser halten zu können. Weiterhin kann das Haltemittel auch durch eine Querstange gebildet werden, die an einer der in Bewegungsrichtung der Schaufelkante dem Greiferelement gegenüberliegenden Seite der Grundstruktur vorgesehen ist. Diese Querstange bildet somit ein Widerlager, das ein Verschieben der Lebensmittelportion durch ein Greiferelement, insbesondere bei einem einseitigen Greifer, verhindert.

In einer Ausführungsform ist an der Grundstruktur ein Doppelgelenkhebel angebracht, wobei der Hebel über Gelenkstangen mit der Schaufelkante und dem von der Schaufelkante beabstandeten Ende des flexiblen Flächenelements verbunden ist, wobei ein Antriebselement ausgelegt ist, den Hebel zu verschwenken. Das Antriebselement ist insbesondere ein Lineartrieb, beispielsweise ein hydraulischer oder pneumatischer Zylinder.

Die Schaufelkante und/oder das von der Schaufelkante beabstandete Ende des flexiblen Flächenelements sind insbesondere in der Grundstruktur geführt. Dafür kann in der Grundstruktur eine Schiene vorgesehen sein, in die die Schaufelkante und das von der Schaufelkante beabstandete Ende des flexiblen Flächenelements eingreifen. Das von der Schaufelkante beabstandete Ende des flexiblen Flächenelements kann insbesondere eine Querstange sein. Alternativ zu dem beweglichen von der Schaufelkante beabstandeten Ende des flexiblen Flächenelements kann das Ende des flexiblen Flächenelements auch aufgerollt werden. Insbesondere kann eine entsprechende Rolle in Aufwickelrichtung vorgespannt sein, beispielsweise durch eine Drehfeder.

In einer Ausführungsform kann ein umlaufendes Treibelement an der Grundstruktur vorgesehen sein, wobei an dem Treibelement sowohl die Schaufelkante als auch das von der Schaufelkante beabstandete Ende des flexiblen Elements vorgesehen sind, und wobei ein Antriebselement ausgelegt ist, das Treibelement in Umlaufrichtung zu bewegen. Das umlaufende Treibelement kann insbesondere ein Riemen oder eine Kette sein. In einer weiteren Ausführungsform kann auch lediglich die Schaufelkante an dem umlaufenden Treibelement befestigt sein, und das beabstandete Ende des flexiblen Flächenelements auf einer Rolle aufgewickelt sein, die insbesondere in Aufwickelrichtung vorgespannt ist.

Der im Vorangehenden beschriebene Hebel und/oder das umlaufende Treibelement können insbesondere auch an beiden Enden in Breitenerstreckungsrichtung des Schaufelelements beziehungsweise des davon beabstandeten Ende des flexiblen Flächenelements vorgesehen sein.

In einer Ausführungsform ist die Schaufelkante in der Grundstruktur verschieblich geführt. Insbesondere ist die Schaufelkante beidseitig in der Grundstruktur verschieblich geführt. Durch die verschiebliche Führung der Schaufelkante kann ermöglicht werden, dass die Schaufelkante eine gewünschte Bewegung ausführt, um die Lebensmittelportion zu untergreifen. Insbesondere ist die Schaufelkante geradlinig geführt. In anderen Ausführungsformen kann die Schaufelkante entlang einer gekrümmten Schiene in der Grundstruktur geführt werden.

In einer Ausführungsform wird das flexible Flächenelement an der Schaufelkante umgelenkt. Dadurch kann eine Kompensation der Relativbewegung zwischen der Auflagefläche und der Lebensmittelportion erreicht werden. Insbesondere steht der obere Abschnitt des flexiblen Flächenelements still, während sich die Schaufelkante bewegt. Somit bewirkt das flexible Flächenelement, dass die Lebensmittelportion auf die Auflagefläche des Greiferelements befördert und von dieser heruntergefördert wird, da eine entsprechende Relativbewegung zwischen dem flexiblen Flächenelement und der Schaufelkante erfolgt.

In einer vorteilhaften Ausführungsform ist das von der Schaufelkante beabstandete Ende des flexiblen Flächenelements an der Grundstruktur befestigt. Dies ermöglicht insbesondere wenn das von der Auflagefläche aus gesehen gegenüberliegende Ende des Flächenelements zur Schaufelkante an der Grundstruktur befestigt ist, dass die vorgenannte Kompensationsbewegung ohne zusätzliche Antriebsmittel erreicht werden kann. Das andere Ende des flexiblen Flächenelements ist entweder verschieblich gelagert oder auf einer Rolle aufgerollt.

In einer Ausführungsform ist das flexible Flächenelement im Bereich der Auflagefläche um die Bewegungsrichtung der Schaufelkante einfach oder auch mehrfach z.B. in Wellenform gekrümmt. Durch diese Krümmung kann eine einseitige und zweiseitige Biegesteifigkeit des ansonsten flexiblen Flächenelements erreicht werden. Dieser Effekt ist ähnlich wie bei ausziehbaren Bandmaßen aus Metall. Das flexible Flächenelement ist in dieser Ausführungsform vorteilhafterweise als flaches, flächiges Bauteil, insbesondere aus Blech, ausgeführt, wobei auch Ausgestaltungen aus einem flexiblen Polymermaterial in Frage kommen. Die Krümmung des flexiblen Flächenelements wird insbesondere durch ein entsprechendes Führungselement am gegenüberliegenden Ende der Auflagefläche ausgehend von der Schaufelkante, erreicht. Diese Ausführungsform ermöglicht, dass die Schaufelkante nicht geführt werden muss, sondern allein durch die erreichte Biegesteifigkeit des flexiblen Flächenelements gehalten wird.

In einer weiteren Ausführungsform kann das Flächenelement in seiner ebenen Anordnung in einer Richtung gefaltet werden und ist in der Gegenrichtung starr. Dies kann beispielsweise dadurch erreicht werden, dass das flexible Flächenelement Gelenke aufweist, die ausgehend von der ebenen Anordnung lediglich in einer Richtung bewegt werden können, nämlich in der Richtung, dass die Schaufelkante angehoben wird. Das flexible Flächenelement kann entweder ausschließlich durch die Gelenkelemente gebildet werden, oder lediglich Gelenkelemente aufweisen und im Weiteren aus einer flexiblen Folie, die mit den Gelenkelementen verbunden ist, gebildet sein. Auch in dieser Ausführungsform kann die Schaufelkante ohne weitere Führung und lediglich durch Befestigung am Flächenelement aus- und eingefahren werden. Das flexible Flächenelement, das in seiner ebenen Anordnung in einer Richtung gefaltet werden kann und in der Gegenrichtung starr ist, ist insbesondere eine partiell steife Folie oder eine Folie, an der flexible und partiell starre Leisten angebracht sind, die eine entsprechende Bewegung des flexiblen Flächenelements ermöglichen. Insbesondere können die Leisten so mit Gelenken miteinander verbunden sein, dass sie in einer ebenen Anordnung des Flächenelements lediglich in einer Richtung geknickt werden können und in Gegenrichtung starr sind. Gliederelemente können so ausgebildet sein, dass sie nach oben und unten steif sind.

Dies kann z.B. dadurch erreicht werden, dass die Glieder zueinander nach Verlassen der Umlenkung in einer Führung seitlich zueinander verschoben werden.

In einer Ausführungsform ist die Schaufelkante bezüglich der Grundstruktur über zumindest einen Arm mit zumindest einem Gelenk darin gelagert. Insbesondere ist die Gelenkachse des Arms in der Hochrichtung orientiert. Der Arm kann weiterhin insbesondere in Form eines Kniehebels ausgebildet sein und ermöglicht insbesondere die Schaufelkante im Wesentlichen in horizontaler Richtung zu verfahren. Vorteilhafterweise sind zwei Arme vorgesehen, die jeweils an voneinander beabstandeten Punkten der Schaufelkante und der Grundstruktur befestigt sind. Insbesondere können die Arme unter dem flexiblen Flächenelement herausschwenken. Die Arme schieben die Schaufelkante, an der das Flächenelement befestigt ist, unter die Lebensmittelportion.

Die Erfindung stellt weiterhin einen Roboter mit einem erfindungsgemäßen Greifer bereit, wobei der Roboter ein Delta-Roboter ist. Ein Delta-Roboter ist ein Roboter mit einer Delta-Kinematik, wobei der Roboter insbesondere eine Roboterbasis und Werkzeugbefestigung umfasst. Die Roboterbasis und die Werkzeugbefestigung sind durch wenigstens drei Kombinationen aus einem oberen Roboterarm und einem unteren Roboterarm verbunden, wobei in jeder der Kombinationen der obere Roboterarm und der untere Roboterarm schwenkbar miteinander verbunden sind. Durch das unabhängige Verschwenken der einzelnen Roboterarme kann eine schnelle seitliche Versetzung der Werkzeugbefestigung ermöglicht werden, wodurch insbesondere in Pick-and-Place-Anwendungen für Lebensmittelportionen ein schnelles, seitliches Versetzen der Lebensmittelportionen ermöglicht wird.

Alternativ kann der Roboter auch ein Portal-Roboter sein, wobei der erfindungsgemäße Greifer durch den Portal-Roboter linear in mindestens eine und vornehmlich insbesondere in zwei oder drei linear unabhängige Richtungen verfahren werden kann.

Die Erfindung stellt weiterhin einen Roboter mit einem Greifer bereit, der insbesondere an einer Greifertragstruktur des Roboters angeordnet ist, wobei der Greifer verdrehbar und/oder höhenverstellbar sein kann. Die Verdrehbarkeit des Greifers bezüglich der Greifertragstruktur ermöglicht, dass er jeweils zu Lebensmittelportionen ausrichtbar ist. Eine Höhenverstellbarkeit des Greifers ermöglicht, dass Lebensmittelportionen sequentiell ergriffen werden können.

Die Erfindung stellt weiterhin ein Verfahren zum Handhaben von Lebensmittelportionen bereit, mit einem Greifer an einem Roboter, das die folgenden Schritte aufweist: Zunächst wird eine Schaufelkante eines Greiferelements bezüglich einer Grundstruktur des Greifers bewegt, sodass die Schaufelkante eine Lebensmittelportion untergreift. Dann wird die Schaufelkante weiterbewegt, sodass die Lebensmittelportion auf einer Auflagefläche angeordnet wird, die ausschließlich durch ein flexibles Element gebildet wird, das während der Bewegung der Schaufelkante an einem Ende der Auflagefläche umgelenkt wird.

Die Lebensmittelportion kann bereichsweise auch auf der Schaufelkante aufliegen, die ein starres Bauteil darstellt. Dennoch wird die Auflagefläche, die sich an die Schaufelkante anschließt, ausschließlich durch ein flexibles Flächenelement gebildet. Dies bedeutet, dass die Auflagefläche frei von starren Elementen ist, die in ihrer Größe der Auflagefläche zumindest entsprechen, wie es im Stand der Technik bekannt ist.

In einer vorteilhaften Ausführungsform des Verfahrens wird das flexible Flächenelement während der Bewegung der Schaufelkante an dem der Schaufelkante gegenüberliegenden Ende des Greiferelements umgelenkt.

In einer weiteren vorteilhaften Ausführungsform wird das flexible Flächenelement während der Bewegung der Schaufelkante um die Schaufelkante umgelenkt.

Die Erfindung wird im Folgenden anhand von Ausführungsformen mit Bezug auf die folgenden Figuren weitergehend erläutert:
- Figur 1: zeigt eine perspektivische Ansicht eines Greifers gemäß einer ersten Ausführungsform der Erfindung in einem geöffneten Zustand.
- Figur 2: zeigt eine perspektivische Ansicht des Greifers gemäß der ersten Ausführungsform der Erfindung in einem geschlossenen Zustand.
- Figur 3: zeigt eine perspektivische Ansicht eines Greifers gemäß einer zweiten Ausführungsform der Erfindung in einem geöffneten Zustand.
- Figur 4: zeigt eine perspektivische Ansicht des Greifers gemäß der zweiten Ausführungsform der Erfindung in einem geschlossenen Zustand.
- Figur 5: zeigt eine schematische Schnittansicht eines Greifers gemäß einer dritten Ausführungsform der Erfindung.
- Figur 6: zeigt die Teilschnittansicht A-A des Greifers aus Figur 5 gemäß der dritten Ausführungsform der Erfindung.
- Figur 7: zeigt ein Detail eines Greifers gemäß einer vierten Ausführungsform der Erfindung.
- Figur 8: zeigt eine Seitenansicht eines Greifers gemäß einer fünften Ausführungsform der Erfindung.
- Figur 9: zeigt eine Unteransicht eines Greifers gemäß der fünften Ausführungsform der Erfindung.

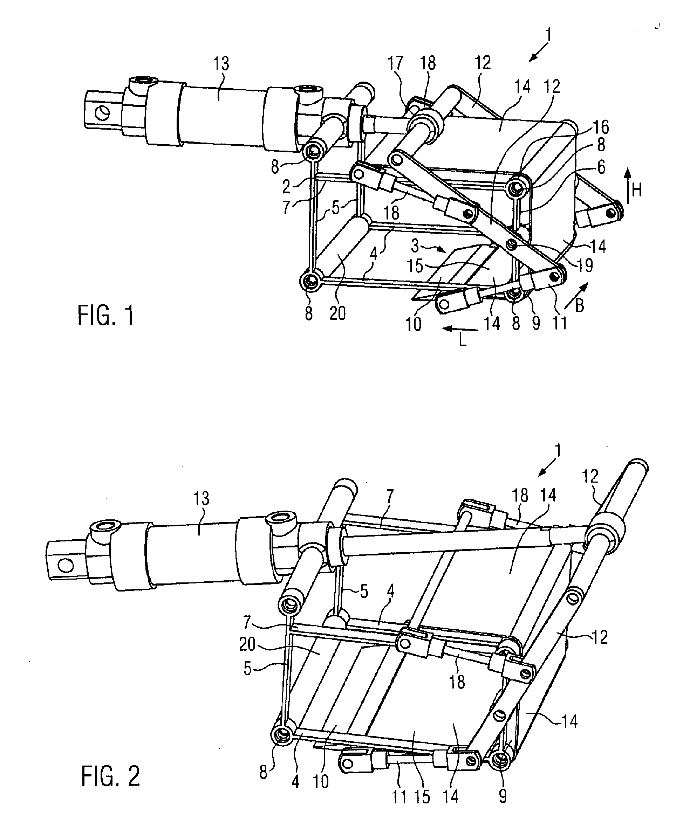

In Figur 1 ist ein Greifer 1 gemäß einer ersten Ausführungsform der Erfindung dargestellt. Der Greifer 1 weist eine Grundstruktur 2 auf, in der ein Greiferelement 3 verschieblich gelagert ist. Die Grundstruktur 2 umfasst im Wesentlichen einen Rahmen, der aus jeweils parallelen unteren Stegen 4, linken Stegen 5, rechten Stegen 6 und oberen Stegen 7 aufgebaut ist. Die unteren Stege 4 erstrecken sich jeweils in Längsrichtung L, die linken und rechten Stege 5, 6 erstrecken sich jeweils in Höhenrichtung H und die oberen Stege erstrecken sich jeweils in Längsrichtung L. Die Stege 4, 5, 6, 7 sind in Breitenrichtung B gesehen beidseitig des Greiferelements 3 angeordnet und werden durch sich in Breitenrichtung B erstreckende Querstangen 8 verbunden.

Auf einer Querstange 8 ist eine Umlenkrolle 9 vorgesehen, die im Folgenden bezüglich des Greiferelements 3 erläutert wird. Das Greiferelement 3 umfasst eine Schaufelkante 10, die im Wesentlichen starr ausgeführt ist. Die Schaufelkante 10 erstreckt sich zwischen den unteren Stegen 4 und ist bezüglich der Stege 4 beweglich.

Die Schaufelkante 10 ist über eine Doppelgelenkstange 11 mit einem Hebel 12 verbunden, wobei der Hebel 12 verschwenkbar an der Grundstruktur 2, insbesondere an den rechten Stegen 6 der Grundstruktur 2 gelagert ist. Ein Verschwenken des Hebels 12 ermöglicht eine Bewegung der Schaufelkante 10 in Längsrichtung L. Dafür kann die Schaufelkante 10 in den unteren Stegen 4 verschieblich gelagert sein, zum Beispiel mittels einer Schienenführung.

Ein Verschwenken des Hebels 12 erfolgt mittels eines Linearantriebs 13, vornehmlich in Form eines Pneumatikzylinders oder alternativ in Form eines Hydraulikzylinders. Der Kolben des Linearantriebs 13 ist an eine Querstange des Hebels 12 angeschlossen. Der Hebel 12 besteht wiederum aus zwei Hebelelementen, die jeweils an in Breitenrichtung B gegenüberliegenden Seiten der Grundstruktur 2 befestigt sind.

An die Schaufelkante 10 schließt sich ein flexibles Flächenelement 14 an. Das flexible Flächenelement 14 ist insbesondere an der Seite der Schaufelkante 10 befestigt, die der abgeschrägten Seite der Schaufelkante 10, die der Aufnahme der Lebensmittelportionen dient, gegenüberliegt. Das flexible Flächenelement 14 ist vorteilhafterweise als Folie ausgeführt. Alternativ kann das flexible Flächenelement 14 als flexibles Blech ausgeführt sein. Das flexible Flächenelement 14 bildet eine Auflagefläche 15, die sich zwischen der Schaufelkante 10 und der Umlenkrolle 9 erstreckt. Die Größe der Auflagefläche 15 ist somit in Abhängigkeit der Position der Schaufelkante 10 variabel. Bei einer Bewegung der Schaufelkante 10 läuft das flexible Flächenelement 14 um die Umlenkrolle 9. Das flexible Flächenelement 14 erstreckt sich somit im Bereich der Auflagefläche 15 in einer Ebene, die durch die Längsrichtung L und Breitenrichtung B aufgespannt wird. Daran anschließend erstreckt sich das flexible Flächenelement 14 im Wesentlichen in Hochrichtung H und wird im oberen Bereich der Grundstruktur 2 durch eine weitere Umlenkrolle 16 umgelenkt, sodass es sich weiterhin in Längsrichtung L im oberen Bereich der Grundstruktur 2 erstreckt.

Das von der Schaufelkante 10 aus gesehen gegenüberliegende Ende des flexiblen Flächenelements 14 ist an einer Querstange 17 befestigt, die mittels einer Doppelgelenkstange 18 an dem Hebel 12 angebracht ist. Die Doppelgelenkstangen 11 und 18 sind jeweils an gegenüberliegenden Abschnitten des Hebels 12 bezüglich seiner Schwenklagerung 19 an der Grundstruktur 2 angebracht. Durch diese Anordnung wird die Querstange 17 mit der gleichen Geschwindigkeit wie die Schaufelkante 10 entlang der Grundstruktur 2 bewegt, sodass das flexible Flächenelement 14 in einem gestreckten, vornehmlich gespannten Zustand ist. Dadurch ermöglicht das flexible Flächenelement eine Auflagefläche 15 bereitzustellen, die dafür geeignet ist, dass eine Lebensmittelportion darauf aufgenommen werden kann. Zum Ausgleich oder zur Vorspannung des flexiblen Flächenelements kann wenigstens eine der Doppelgelenkstangen, insbesondere die obere Doppelgelenkstange 18, in ihrer Längserstreckung teleskopisch, elastisch vorgespannt sein.

Beim Bewegen der Schaufelkante 10 vom offenen Zustand, der in Figur 1 gezeigt wird, zum geschlossenen Zustand, der in Figur 2 gezeigt wird, nähert sich die Schaufelkante 10 einem Haltemittel 20 in Form einer Querstange der Grundstruktur 2 an. Im geöffneten Zustand nach Figur 1 begrenzt die Querstange 20, zusammen mit unteren Stegen 4 und der Schaufelkante 10 den Arbeitsraum des Greifers.

Der Greifer wird im geöffneten Zustand gemäß Figur 1 so abgesenkt, dass eine Lebensmittelportion in seinem Arbeitsraum angeordnet ist. Dann wird die Schaufelkante verschoben, sodass die Lebensmittelportion von der Schaufelkante 10 untergriffen wird, und die Lebensmittelportion auf der durch das flexible Flächenelement 14 gebildeten Auflagefläche 15 angeordnet wird. Das Haltemittel in Form der Querstange 20 bildet dabei gegebenenfalls ein Anschlagselement, das ein Verrutschen der Lebensmittelportion aufgrund der von der Schaufelkante 10 auf die Lebensmittelportion beim Untergreifen aufgebrachten Kraft verhindert.

Während der Aufnahmebewegung der Schaufelkante 10 vom geöffneten Zustand des Greifers 1 zum geschlossenen Zustand des Greifers 1 bewegt sich das flexible Flächenelement 14 um die Umlenkrolle 9, sodass es um 90° umgelenkt wird. Entsprechend erfolgt eine Umlenkung um 90° um die weitere Umlenkrolle 16. In anderen vergleichbaren Ausführungsformen kann auch nur eine Umlenkung des flexiblen Flächenelements 14 erfolgen, wobei dann der Hebel 12 und die Doppelgelenkstange 11, 18 entsprechend angepasst werden. Insbesondere kann eine Umlenkung um die Umlenkrolle 9 und/oder die Umlenkrolle 16 auch um einen Winkel abweichend von 90° erfolgen, so dass sich das flexible Flächenelement 14 in einem Winkel zur Vertikalen oder zur Horizontalen erstreckt. Die Doppelgelenkstangen 11, 18 ermöglichen, dass das flexible Flächenelement 14 vorgespannt werden kann, sodass es während des Verfahrens nicht gestaucht wird beziehungsweise keine Falten wirft.

Vornehmlich besteht das flexible Flächenelement aus einem elastischen oder festen Band oder einer Folie. Alternativ kann es aus einer flächigen, gliedrigen Kette bestehen.

Nachdem bei der erfindungsgemäßen Lösung im geöffneten Zustand das Greiferelement nicht in Längsrichtung L seitlich neben die Grundstruktur 2 verfahren werden muss, sind die Bauraumanforderungen für den Greifer geringer, was sich insbesondere bei der Ausgestaltung von einseitigen Greifern, wie in Figuren 1 und 2 dargestellt, bemerkbar macht. Somit können Lebensmittelportionen, die auf einer Aufnahmefläche beziehungsweise einem Förderband angeordnet sind, von dem sie mittels des Greifers 1 aufgenommen werden, in einem geringeren Abstand zueinander angeordnet werden, ohne dass der Greifer 1 unbeabsichtigt in Kontakt mit benachbarten Lebensmittelportionen von der aufzunehmenden Lebensmittelportion kommt. Beim Einsatz einer starren Schaufel wie im Stand der Technik, muss der Portionsabstand dagegen mindestens der Länge der Schaufel entsprechen.

Somit kann erfindungsgemäß durch den geringeren Abstand zwischen den einzelnen Lebensmittelportionen der Durchsatz im Lebensmittelportionsstrom erhöht werden.

Weiterhin kann durch eine Reduktion der Bauteileanzahl und des Greifergewichts eine schnellere Bewegung des Greifers erfolgen, und somit eine Erhöhung der Transportleistung eines Roboters, an dem der erfindungsgemäße Greifer befestigt ist, bewirkt werden.

Nachdem lediglich ein Lineartrieb 13 für den Betrieb des Greifers 1 notwendig ist, kann eine Reduzierung der Anzahl der Stellantriebe, insbesondere der pneumatischen Elemente, und somit eine Verringerung der Verschleißteile ermöglicht werden.

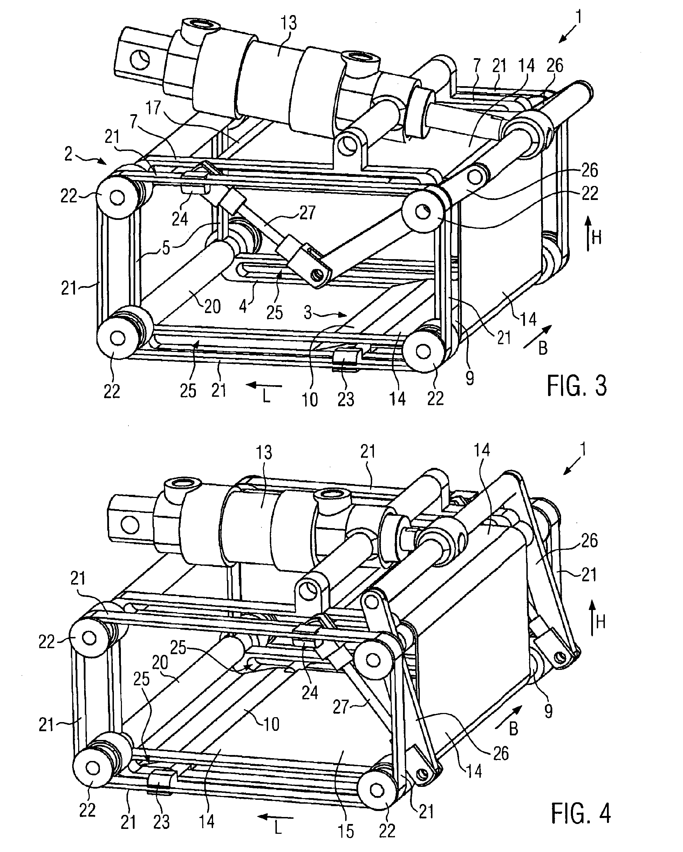

In Figuren 3 und 4 ist eine zweite Ausführungsform eines erfindungsgemäßen Greifers 1 dargestellt. In dieser Ausführungsform ist ein umlaufendes Band 21 über Rolle 22 an der Grundstruktur 2 befestigt. Die Schaufelkante 10 ist über ein Befestigungselement 23 mit dem umlaufenden Band 21 verbunden. Weiterhin ist am gegenüberliegenden Ende des flexiblen Flächenelements 14 die Querstange 17 mit einem Befestigungselement 24 an dem umlaufenden Band 21 befestigt. Insbesondere ist jeweils ein umlaufendes Band 21 auf beiden Seiten in Breitenrichtung B des Greifers 1 vorgesehen. Wenn das umlaufende Band 21 bewegt wird, wird die Schaufelkante 10 über das Befestigungselement 23 und das gegenüberliegende Ende des flexiblen Flächenelements 14 über das Befestigungselement 14 und die Querstange 17 entsprechend mitbewegt. Somit kann auch in dieser Ausführungsform eine Bewegung des Greiferelements 3 in einer Form erfolgen, dass das flexible Flächenelement 14 gespannt bleibt.

Wie in Figuren 3 und 4 dargestellt ist, wird die Schaufelkante 10 in Ausnehmungen 25 in den unteren Stegen 4 geführt. Im oberen Bereich der Grundstruktur 4 bei den oberen Stegen 7 können ebenfalls entsprechende Ausnehmungen zum Führen der Querstange 17 vorgesehen sein.

Zum Antrieb des umlaufenden Bands 21 ist insbesondere ein Linearantrieb 13 vorgesehen, der über einen Hebeltrieb mit dem umlaufenden Band 21 verbunden ist. Der Hebeltrieb weist einen Hebel 26 auf, der mit dem Kolben des Linearantriebs 13 verbunden ist. An der anderen Seite des Hebels 26 ist eine Doppelgelenkstange 27 vorgesehen, die den Hebel 26 über das Befestigungselement 24 mit dem umlaufenden Band verbindet. Dadurch, dass das Band 21 umlaufend ist, kann die Einleitung der Kraft des Linearantriebs nur an einer Stelle erfolgen, wodurch die Komplexität des Aufbaus des Antriebs des Greiferelements 3 vereinfacht werden kann. Wenn der Kolben des Linearantriebs 13 eingefahren wird, wie in Figur 4 gezeigt, wird das umlaufende Band 21 so bewegt, dass sich die Schaufelkante 10 und das sich daran anschließende flexible Flächenelement 14 in Längsrichtung L hin zu dem Haltemittel 20 bewegen. Somit wird eine Lebensmittelportion, die im Arbeitsbereich des Greifers angeordnet ist, der zwischen der Schaufelkante 10 und dem Haltemittel 20 definiert ist, über die Schaufelkante 10 auf die Auflagefläche 15 aufgeschoben und kann daraufhin mit dem Greifer 1 bewegt werden.

Alternativ zu dem Hebelsystem der Ausführungsformen gemäß Figuren 3 und 4, der die translatorische Bewegung des Linearantriebs 13 auf das umlaufende Band 21 überträgt, kann auch ein Drehantrieb vorgesehen sein, der direkt oder über eine Übersetzung eine oder mehrere der Rollen 22 des umlaufenden Bands 21 antreibt. Insbesondere kann dafür ein Schrittmotor vorgesehen sein.

Das umlaufende Band 21 ist insbesondere ein Riemen, wobei die Befestigungselemente 23, 24 insbesondere Klemmstücke sind. Das umlaufende Band 21 kann als flacher Riemen, wie in Figuren 3 und 4 dargestellt, oder auch als runder Riemen ausgeführt sein.

Das Ergreifen einer Lebensmittelportion mit dem Greifer gemäß Figuren 3 und 4 erfolgt ähnlich wie mit dem Greifer, der in Figuren 1 und 2 dargestellt ist. Zunächst wird der Greifer im geöffneten Zustand, der in Figur 3 dargestellt ist, über der Lebensmittelportion abgesenkt, sodass die Lebensmittelportion, die vornehmlich auf einer Auflagefläche oder auf einem Transportband aufliegt, zwischen den unteren Stegen 4 und dem Haltemittel 20 und der Schaufelkante 10 angeordnet ist. Dann wird der Linearantrieb so betätigt, dass die Schaufelkante 10 unter die Lebensmittelportion gezogen wird, sodass die Lebensmittelportion auf der durch das flexible Flächenelement 14 gebildeten Auflagefläche 5 angeordnet wird. Beim Verfahren der Schaufelkante 10 vergrößert sich die Auflagefläche 15 beständig dadurch, dass das flexible Flächenelement um die Umlenkrolle 9 umgelenkt wird. Durch das umlaufende Band 21, an dem die gegenüberliegenden Enden des flexiblen Flächenelements über die Schaufelkante beziehungsweise über die Querstange 17 befestigt sind, wird sichergestellt, dass das flexible Flächenelement in Längsrichtung gespannt ist. Somit bildet das flexible Flächenelement eine Auflagefläche 15 für eine Lebensmittelportion, die nicht durch weitere darunter angeordnete Schaufelelemente oder Ähnliches stabilisiert werden muss.

Im oberen Bereich der in Figuren 1 bis 4 dargestellten Greifer ist jeweils ein Befestigungselement vorgesehen, mit dem der Greifer an einem Roboter, insbesondere einem Delta-Roboter, befestigt werden kann. Dieses Befestigungselement ist allerdings in den Figuren nicht dargestellt.

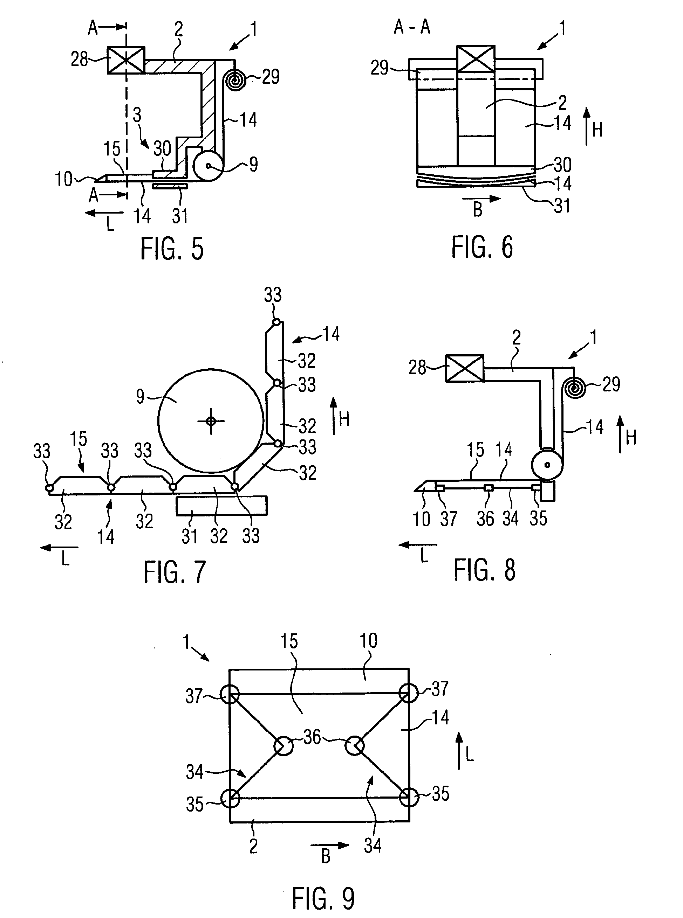

In Figur 5 ist eine weitere Ausführungsform eines erfindungsgemäßen Greifers 1 schematisch dargestellt. Die Grundstruktur 2 des Greifers 1 weist im oberen Bereich ein Befestigungselement 28 zur Befestigung an einem Roboter auf. Das flexible Flächenelement 14 ist an seinem von der Schaufelkante 10 gegenüberliegend angeordneten Ende auf einer Rolle 29, die an der Grundstruktur befestigt ist, aufgerollt. Ausgehend von der Rolle 29 erstreckt sich das flexible Flächenelement 14 im Wesentlichen entgegen der Hochrichtung H nach unten, und wird dann um die Umlenkrolle 9 umgelenkt, sodass es sich in Längsrichtung L bis hin zur Schaufelkante 10 erstreckt. Dieser Bereich bildet die Auflagefläche 15 des Greiferelements 3.

Das flexible Flächenelement 14 ist ausgehend von der Rolle 29 bis hin zur Umlenkrolle 19 biegeweich, erstreckt sich aber von der Umlenkrolle 9 bis hin zur Schaufelkante 10 als biegesteifes Element. Dies wird durch ein oberes Führungselement 30 und ein unteres Führungselement 31 erreicht, die Teil der Grundstruktur 2 sind und zwischen der Umlenkrolle 9 und der Schaufelkante 10 angeordnet sind. Das obere und untere Führungselement 31 sind so ausgebildet, dass sie das flexible Flächenelement im Bereich der Auflagefläche 5 um die Längsrichtung L krümmen. Dies kann insbesondere in Figur 6 gesehen werden, in der eine Schnittzeichnung A-A durch die in Figur 5 gekennzeichnete Schnittebene dargestellt wird. Das flexible Flächenelement 14 ist als Blech oder flexible Plastikplatte ausgebildet. Durch die Krümmung des Flächenelements wird eine Biegesteifigkeit ähnlich wie bei einem Bandmaß erreicht, sodass die Schaufelkante 10 und dass das Biegeelement 14 wie ein Kragbalken von den oberen und unteren Führungselementen 10, 31 gestützt hervorragen. Insbesondere ist das flexible Flächenelement 14 an der Schaufelkante 10 ebenfalls mit der in Figur 6 dargestellten Krümmung befestigt, sodass die Biegesteifigkeit des flexiblen Flächenelements 14 bis hin zur Schaufelkante 10 aufrechterhalten werden kann.

Alternativ zum oberen Führungselement 30 kann die Krümmung im flexiblen Flächenelement auch durch eine entsprechend geformte Umlenkrolle 9 erzeugt werden. Um ein Abkippen der Auflagefläche 15 nach unten zu vermeiden, ist dabei dennoch ein unteres Führungselement 31 notwendig.

In Figur 7 ist eine alternative Ausführungsform für ein flexibles Flächenelement dargestellt, die in einer Ausführungsform gemäß Figur 5 eingesetzt werden kann, wobei in diesem Fall eine Aufwicklung des Flächenelements 14 auf der Rolle 29 in gegenteiliger Richtung erfolgen würde, und weiterhin keine gekrümmten Führungselemente 30, 31 notwendig sind. Das flexible Flächenelement 14 gemäß Figur 7 besteht aus aneinander angeordneten starren Elementen 32, die jeweils über Gelenke 33 miteinander verbunden sind. Die Gelenke 33 sind so ausgeführt, dass das flexible Flächenelement 14 in seiner ebenen Anordnung nur in einer Richtung gefaltet werden kann und in der Gegenrichtung starr ist. Dafür dienen insbesondere Anschlagsflächen der starren Elemente 32, die im Bereich der Gelenke 33 angeordnet sind. Insbesondere sind die Anschlagsflächen unterhalb der Gelenke 33 im Wesentlichen mit einer Normalen in Erstreckungsrichtung des ebenen Flächenelements 14 ausgestattet, und überhalb der Gelenke 33 mit zueinander angewinkelten Anschlagsflächen, wenn das flexible Flächenelement eben angeordnet ist. Wie in Figur 7 gesehen werden kann, kann das Flächenelement somit beispielsweise im Bereich der Umlenkrolle 9 flexibel umgelenkt werden, wobei es im Bereich der Auflagefläche 15 eine starre Auflagefläche bildet. Die Auflagefläche 15 wird durch das untere Führungselement 31, das im Wesentlichen als eine an der Grundstruktur 2 angebrachte starre Platte ausgebildet ist, gestützt. Somit kann durch das in Figur 7 dargestellte Flächenelement 14 ebenfalls ein Greifer mit einer anderweitig nicht gestützten Schaufelkante 10, wie in Figur 5 dargestellt, erreicht werden.

Figuren 8 und 9 stellen eine weitere Ausführungsform eines erfindungsgemäßen Greifers von der Seite und von unten dar. An die Schaufelkante 10 schließt sich wiederum ein flexibles Flächenelement 14 an, das um eine Umlenkrolle 9 am von der Schaufelkante 10 gegenüberliegenden Ende der Auflagefläche 15 umgelenkt wird. In diesem Bereich ist unterhalb der Umlenkrolle 9 an der Grundstruktur 2 des Greifers ein Arm 34 über ein Gelenk 35 verdrehbar gelagert. Der Arm 34 weist ein im Wesentlichen zentrales weiteres Gelenk 36 auf, und ist über ein weiteres Gelenk 37 mit der Schaufelkante 10 verbunden. Die Gelenke 35, 36, 37 sind jeweils lediglich um die Hochrichtung H verschwenkbar. Die zwischen den Gelenken 35, 36 beziehungsweise 36, 37 vorgesehenen Abschnitte des Arms 34 sind jeweils starr. Somit ermöglichen die beidseitig in Breitenrichtung B vorgesehenen Arme 34 eine Führung der Schaufelkante 10 in Längsrichtung L. Das flexible Flächenelement 14 ist an der Schaufelkante 10 befestigt, kommt aber nicht in Berührung mit den Armen 34. Somit bildet wiederum das flexible Flächenelement 14 eine Auflagefläche, auf der eine Lebensmittelportion angeordnet werden kann. In Figur 9 ist gezeigt, dass die Arme 34 nach innen in Breitenrichtung B beim Zurückfahren der Schaufelkante 10 in Längsrichtung L einknicken. In alternativen Ausführungsformen können die Arme 34 nach außen einknicken, sodass sich die mittleren Gelenke 36 beim Einfahren der Schaufelkante 10 voneinander entfernen.

Alternativ zu der in den Figuren 5 und 8 dargestellten Aufwickelvorrichtung kann das flexible Flächenelement auch an seinem Ende lediglich in einer Schiene, beispielsweise mittels einer Querstange, geführt sein. Eine Vermeidung einer Aufwickelvorrichtung kann bezüglich den Hygieneanforderungen eines Greifers für Lebensmittelportionen vorteilhaft sein, da ein aufgewickeltes flexibles Flächenelement schwerer zu reinigen ist.

Eine Verstellung der Schaufelkante in den voranstehend beschriebenen Ausführungsformen der einseitigen Greifer ist beispielsweise im Bereich von 100 mm. Die voranstehenden Prinzipien können aber auch auf zweiseitige Greifer übertragen werden, wobei dann jeweils zwei Schaufelkanten aufeinander zu beziehungsweise voneinander weg bewegt werden. In diesem Fall würde die Schaufelkante jeweils nur um 50 mm verstellt werden, bei einem entsprechenden Einsatzzweck des Greifers.

Alternativ zu den voranstehend diskutierten Linearantrieben kann ein Drehmotor eingesetzt werden, der beispielsweise direkt an den Hebeln aus Figuren 1 bis 4 beziehungsweise den Armen aus Figur 8 angreift.

Alternativ zu der beidseitigen Führung des flexiblen Flächenelements 14 kann das von der Schaufelkante 10 gegenüberliegende Ende des flexiblen Flächenelements 14 auch lediglich durch ein elastisches Element, das an der Grundstruktur befestigt ist, auf Zug gehalten werden.

Alternativ zu dem Haltemittel 20 in Form einer Querstange kann auch ein elastisch vorgespannter oder separat angetriebener Niederhalter an der Grundstruktur des Greifers vorgesehen werden, der von oben auf die Lebensmittelportion abgesenkt wird.

## Patentansprüche

1. Greifer (1) für Lebensmittelportionen, insbesondere Stapel von aufgeschnittenen Lebensmittelscheiben, für einen Roboter, wobei der Greifer (1) umfasst:
eine Grundstruktur (2), die an dem Roboter anbringbar ist,
ein Greiferelement (3), das eine Schaufelkante (10) und eine Auflagefläche (15), die sich an die Schaufelkante (10) anschließt, umfasst, wobei die Schaufelkante (10) bezüglich der Grundstruktur (2) beweglich ist, um die Lebensmittelportion zu untergreifen,
**dadurch gekennzeichnet, dass**
die Auflagefläche (15) ausschließlich durch ein flexibles Flächenelement (14) gebildet ist.

2. Greifer nach Anspruch 1, wobei das flexible Flächenelement (14) an dem der Schaufelkante (10) gegenüberliegenden Ende der Auflagefläche (15) umlenkbar ist.

3. Greifer nach Anspruch 1 oder 2, wobei das flexible Flächenelement (14) an der Schaufelkante (10) befestigt ist.

4. Greifer nach einem der vorangehenden Ansprüche, wobei ein Haltemittel (20) an der Grundstruktur (2) vorgesehen ist, das ausgelegt ist, die Lebensmittelportion während des Untergreifens durch das Greiferelement (3) zu halten.

5. Greifer nach einem der vorangehenden Ansprüche, wobei an der Grundstruktur (2) ein Hebel (12) angebracht ist, wobei der Hebel (12) über Gelenkstangen (11, 18) mit der Schaufelkante (10) und dem von der Schaufelkante (10) beabstandeten Ende des flexiblen Flächenelements (14) verbunden ist, wobei ein Antriebselement (13) ausgelegt ist, den Hebel (12) zu verschwenken.

6. Greifer nach einem der Ansprüche 1 bis 5, wobei ein umlaufendes Treibelement (21) an der Grundstruktur (2) vorgesehen ist, wobei an dem Treibelement (21) sowohl die Schaufelkante (10) als auch das von der Schaufelkante (10) beabstandete Ende des flexiblen Flächenelements (14) befestigt sind, und wobei ein Antriebselement (13) ausgelegt ist, das Treibelement (21) in Umlaufrichtung zu bewegen.

7. Greifer nach Anspruch 1, wobei das flexible Flächenelement (14) an der Schaufelkante (10) umlenkbar ist.

8. Greifer nach Anspruch 1 oder 7, wobei die Schaufelkante (10) in der Grundstruktur (2) verschieblich geführt ist, und wobei das von der Schaufelkante (10) beabstandete Ende des flexiblen Flächenelements (14) an der Grundstruktur (2) befestigt ist.

9. Greifer nach einem der Ansprüche 1 bis 6, wobei das flexible Flächenelement (14) im Bereich der Auflagefläche (15) quer zur Bewegungsrichtung der Schaufelkante (10) gekrümmt ist.

10. Greifer nach einem der Ansprüche 1 bis 6, wobei das flexible Flächenelement (14) in seiner ebenen Anordnung in einer Richtung faltbar und in der Gegenrichtung starr ist.

11. Greifer nach einem der Ansprüche 1 bis 6, wobei die Schaufelkante (10) bezüglich der Grundstruktur (2) über zumindest einen Arm (34) mit zumindest einem Gelenk (36) darin gelagert ist.

12. Roboter mit einem Greifer (1) nach einem der vorangehenden Ansprüche, wobei der Roboter ein Delta-Roboter ist.

13. Verfahren zum Handhaben von Lebensmittelportionen, mit einem Greifer (1) an einem Roboter, mit den folgenden Schritten:
- Bewegen einer Schaufelkante (10) eines Greiferelements (3) bezüglich einer Grundstruktur (2) des Greifers (1), sodass die Schaufelkante (10) eine Lebensmittelportion untergreift, und
- weiteres Bewegen der Schaufelkante, so dass die Lebensmittelportion auf einer Auflagefläche (15) angeordnet wird, die ausschließlich durch ein flexibles Flächenelement (14) gebildet wird, das während der Bewegung der Schaufelkante (10) an einem Ende der Auflagefläche (15) umgelenkt wird.

14. Verfahren nach Anspruch 13, wobei das flexible Flächenelement (14) während der Bewegung der Schaufelkante (10) an dem der Schaufelkante (10) gegenüberliegenden Ende des Greiferelements (3) umgelenkt wird.

15. Verfahren nach Anspruch 13, wobei das flexible Flächenelement (14) während der Bewegung der Schaufelkante (10) um die Schaufelkante (10) umgelenkt wird.
